Europäisches Patentamt

European Patent Office

Office européen des brevets

(19)

(11) Veröffentlichungsnummer: **0 120 324**
**A2**

(12) # EUROPÄISCHE PATENTANMELDUNG

(21) Anmeldenummer: **84102044.9**

(22) Anmeldetag: **28.02.84**

(51) Int. Cl.³: **H 04 M 3/42**
**H 04 Q 11/04**

(30) Priorität: **01.03.83 GB 8305573**

(43) Veröffentlichungstag der Anmeldung:
**03.10.84 Patentblatt 84/40**

(84) Benannte Vertragsstaaten:
**AT DE FR**

(71) Anmelder: **International Standard Electric Corporation**
**320 Park Avenue**
**New York New York 10022(US)**

(72) Erfinder: **McNeilly, Joseph Hood**
**236 Willowfield**
**Harlow Essex(GB)**

(72) Erfinder: **Hansen, Bjorn Napier**
**95 Shetland Road**
**Haverhill Suffolk CB9 0LR(GB)**

(74) Vertreter: **Villinger, Bernhard, Dipl.-Ing. et al,**
**Standard Elektrik Lorenz AG Patent- und Lizenzwesen**
**Postfach 300 929 Kurze Strasse 8**
**D-7000 Stuttgart 30(DE)**

(54) Schaltungsanordnung für eine automatische Fernsprechanlage mit Freisprechbetrieb.

(57) In einer Fernsprechanlage mit Freisprechbetrieb wird beim Umschalten zwischen dem Sendekanal und dem Empfangskanal während einer Verbindung die Verstärkung dieser Kanäle derart gesteuert, daß jeweils der eine Kanal eine größere Verstärkung als der andere aufweist. Dadurch werden Schwierigkeiten vermieden, die sich auf der akustischen Kopplung zwischen Lautsprecher und Mikrofon gründen; damit werden Rückkopplungsschwingungen und dementsprechende Heulgeräusche vermieden.

In der digitalen Fernsprechanlage gemäß der Erfindung ist eine zentrale Verstärkungssteuerschaltung (4) vorgesehen, die für eine Freisprechverbindung unter der Steuerung des zentralen Prozessors (5) der Anlage belegt wird. Der Erfindung liegt die Tatsache zugrunde, daß die Freisprecheinrichtung (2, 3, 4) praktisch nicht von allen Teilnehmern gleichzeitig benötigt wird. Wenn der Freisprechverkehr zunimmt, können zwei oder mehrer zentrale Verstärkungssteuerschaltungen (4') eingesetzt werden.

Fig. 2.

EP 0 120 324 A2

J.H.McNeilly 22-3

## Schaltungsanordnung für eine automatische Fernsprechanlage mit Freisprechbetrieb

Die Erfindung betrifft eine Schaltungsanordnung für eine automatische Fernsprechanlage mit einer Anzahl von Teilnehmeranschlußleitungen, die an ein zur Herstellung von Verbindungen dienendes Koppelnetz angeschlossen sind, und mit Freisprechbetrieb.

In einer solchen Anlage sind eine Anzahl von Fernsprechapparaten an ein gemeinsames Koppelnetz angeschlossen, wobei mittels dieses Koppelnetzes Verbindungen zwischen diesen Fernsprechapparaten hergestellt werden. Einige Fernsprechapparate, insbesondere in Nebenstellenanlagen, haben Freisprecheinrichtungen, d.h. der Fernsprechapparat weist ein Mikrofon, einen Lautsprecher und eine Freisprechtaste oder einen Freisprechschalter auf. Wenn die Freisprechtaste betätigt wird, wird der Fernsprechapparat vom normalen Handapparat auf die Freisprecheinrichtung umgeschaltet. Im Freisprechbetrieb wird in jedem Fernsprechapparat gewöhnlich eine Verstärkungssteuerschaltung verwendet, die die Verstärkung im abgehenden Verbindungsweg und im ankommenden Verbindungsweg derart einstellt, daß die Erzeugung von aufgrund der akustischen Kopplung und des Rückhörens entstehenden Rückkopplungsschwingungen vermieden wird. Diese Rückkopplungsschwingungen werden als ziemlich unangenehme Heulgeräusche zu Gehör gebracht.

Die Aufgabe der Erfindung besteht darin, eine Freisprechtelefonanlage zu schaffen, in der die Möglichkeit des Freisprechens auf wirtschaftliche Weise erreicht wird.

Diese Aufgabe wird dadurch gelöst, daß einigen Anschlußleitungen die Freisprecheinrichtung zur Verfügung stehen,

J.H.McNeilly 22-3

daß die Bereitstellung der Freisprecheinrichtung für eine Verbindung die Steuerung der Verstärkung in den für diese Verbindung vorgesehenen Leitungen einschließen, daß das Koppelnetz zentral gesteuert wird und daß die Freisprecheinrichtung, die die Schaltung zur Schaffung der Verstärkungssteuerung bezüglich der mit der Freisprecheinrichtung arbeitenden Verbindung einschließt, zentralisiert ist, so daß sie in ihrem Freizustand für jede Verbindung zur Verfügung steht, für die die Freisprecheinrichtung erforderlich ist.

Eine derartige Freisprechtelefonanlage ist insbesondere in einer Anlage geeignet, in der die Steuerung der Freisprecheinrichtung mittels einer mikroprozessorgesteuerten digitalen Steuereinrichtung erfolgt. Da die Verstärkungssteuerschaltung zentralisiert ist, wird eine beträchtliche Wirtschaftlichkeit erreicht. Dem liegt die Tatsache zugrunde, daß die Freisprecheinrichtung praktisch nicht zur gleichen Zeit von allen Teilnehmern benutzt wird.
Die Erfindung wird nun anhand von Ausführungsbeispielen näher erläutert. Es zeigen:

Fig. 1    ein Blockschaltbild einer voll digital arbeitenden Fernsprechanlage gemäß der Erfindung,

Fig. 2    ein mehr als in Fig. 1 ins Detail gehendes Blockschaltbild einer Fernsprechanlage mit einer zentralen Freisprechverstärkungssteuerschaltung und

Fig. 3    ein der Fig. 2 ähnliches Blockschaltbild mit zwei zentralen Freisprechverstärkungssteuerschaltungen.

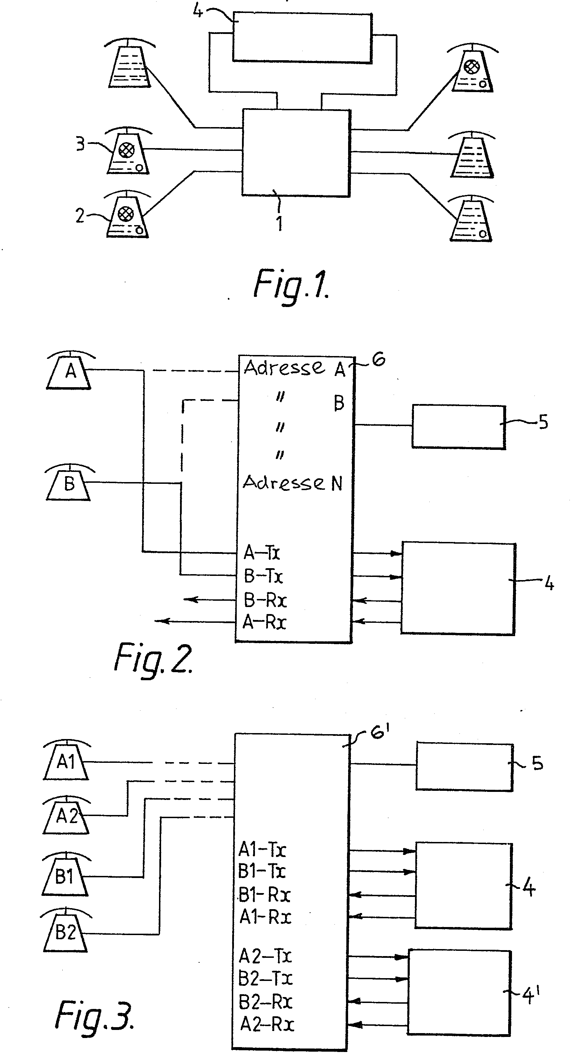

Fig. 1 zeigt ein digitales Koppelnetz 1, das eine Anzahl von Fernsprechapparaten bedient. Einige Fernsprechappara-

J.H.McNeilly 22-3

te, wie z. B. die Apparate 2 und 3, haben Zugang zu einer Freisprecheinrichtung. Jeder Freisprechapparat weist zusätzlich zum Handapparat ein Mikrofon, einen Lautsprecher und eine Freisprechtaste auf, die betätigt wird, wenn Zugang zur Freisprecheinrichtung gewünscht wird. Jeder Freisprechapparat weist ferner einen Indikator auf, beispielsweise eine kleine Neonlampe oder eine lichtaussendende Diode, der durch seinen Schaltzustand dem Benutzer Auskunft darüber gibt, ob die Freisprecheinrichtung frei ist.

Wenn die Freisprecheinrichtung benutzt wird, so wird die Durchschaltung des geeigneten Sprachkanals, entweder des Sendekanals oder des Empfangskanals, durch Steuerung der Verstärkung in diesen Kanälen bewirkt. Die im folgenden beschriebene Fernsprechanlage benutzt eine zentrale Freisprechverstärkungssteuerschaltung 4, die für eine Verbindung dann belegt wird, wenn die Freisprecheinrichtung benötigt wird. Daher sind keine gesonderten Verstärkungssteuereinrichtungen am Ort der Fernsprechapparate nötig.

In Fig. 2 weist das digitale Koppelnetz ein Vielfachregister auf, einen RAM-Speicher 6, in dem jeder Anschlußleitung eine individuelle Adresse zugeteilt ist. Die digitalen Codewerte jedes Sprachkanals werden unter den entsprechenden Registeradressen abgelegt. Aufgrund der Signalinformation von den beiden zu verbindenden Anschlußleitungen A und B wird der PCM-Code B dann zum Kanal A und der Code A zum Kanal B unter Steuerung einer Koppelnetzsteuereinrichtung 5 übertragen.

In verhältnismäßig kleinen Fernsprechanlagen kann die Freisprechmöglichkeit auf nur eine Freisprechverbindung beschränkt bleiben, wenn man dort mit nur einer Frei-

J.H.McNeilly 22-3

sprechverbindung zur gleichen Zeit rechnet. In diesem Fall werden vier solcher Vielfachregister benötigt. Wie noch näher erläutert wird, sind diese Register für die A-B-Sendung, die B-A-Sendung, den A-von-B-Empfang und den B-von-A-Empfang vorgesehen. Die Benutzung dieser Register wird mittels einer Koppelnetzsteuereinrichtung 5 in der Weise gesteuert, daß die Verbindung von den dafür benutzten Registern zu den vier für das Freisprechen vorgesehenen Registern transferiert wird. Diese vier Register werden durch die Freisprechverstärkungssteuerschaltung 4, gesteuert.

In der Schaltungsanordnung der Fig. 2 möge der Rufende A eine Fernsprechstation B angewählt und eine Freisprecheinrichtung angefordert haben. Die digitalen Codezeichen der Stationen A und B, nämlich A-Tx und B-Tx, werden deshalb unter den besonderen Adressen im RAM-Speicher 6 des Koppelnetzes (1) abgelegt. Diese Codezeichen werden dann durch die Freisprechverstärkungssteuerschaltung 4 verarbeitet und von dort zu den Registern B-Rx und A-Rx übertragen. Diese Verarbeitung schließt die oben beschriebenen Verstärkungseinstellung ein. Daher nehmen die vier Register die Stelle der ursprünglichen Speicherstellen A und B ein, die ursprünglich für die Verbindung in Benutzung waren, und ihre Inhalte werden auf normale Weise weiterverarbeitet.

Fig. 3 zeigt eine Fernsprechanlage mit zwei Freisprechverstärkungssteuerschaltungen 4, 4' und den weiteren Registern im RAM-Speicher 6'; es können auch mehr als zwei solcher Freisprecheinrichtungen vorgesehen sein.

0120324

J.H.McNeilly 22-3


Patentansprüche


1. Schaltungsanordnung für eine automatische Fernsprechanlage mit einer Anzahl von Teilnehmeranschlußleitungen, die an ein zur Herstellung von Verbindungen dienendes Koppelnetz angeschlossen sind, und mit Freisprechbetrieb, dadurch gekennzeichnet, daß einigen Anschlußleitungen die Freisprecheinrichtung (2, 3, 4) zur Verfügung steht, daß die Bereitstellung der Freisprecheinrichtung für eine Verbindung die Steuerung der Verstärkung in den für diese Verbindung vorgesehenen Leitungen einschließen, daß das Koppelnetz (1) zentral gesteuert wird und daß die Freisprecheinrichtung, die die Schaltung (4) zur Schaffung der Verstärkungssteuerung bezüglich der mit der Freisprecheinrichtung arbeitenden Verbindung einschließt, zentralisiert ist, so daß sie in ihrem Freizustand für jede Verbindung zur Verfügung steht, für die die Freisprecheinrichtung erforderlich ist.


2. Schaltungsanordnung nach Anspruch 1, dadurch gekennzeichnet, daß das Koppelnetz ein digitales Koppelnetz (1) ist, das von digitalen Prozessoren (5) gesteuert wird, und daß die zu beobachtenden Sprachsignale in digitaler Form mitgeteilt werden.


3. Schaltungsanordnung nach Anspruch 2, dadurch gekennzeichnet, daß das digitale Koppelnetz (1) einen RAM-Speicher (6) mit einer Anzahl von Registern aufweist, von denen jeweils einer einer bedienten Anschlußleitung zugeteilt wird, daß bei der Herstellung einer


ZT/P1-Krü-22.2.84

**0120324**

J.H.McNeilly 22-3

Verbindung hinsichtlich einer dieser Anschlußleitungen das dieser Leitung zugeordnete Register benutzt wird, daß der RAM-Speicher ferner weitere Register zur Verwendung für die Freisprecheinrichtung aufweist, die anstelle von denjenigen in Benutzung genommen werden, die einem Leitungspaar zugeordnet sind, wenn diese Leitungen die Freisprecheinrichtung benötigen, und daß die weiteren Register Zugang zur Verstärkungssteuerschaltung haben.

4. Schaltungsanordnung nach Anspruch 3, dadurch gekennzeichnet, daß zwei oder mehrere Freisprecheinrichtungen (4, 4') vorgesehen sind, von denen jede von einem Satz weiterer Register bedient wird.

-/-

0120324

1/1

Fig.1.

Fig.2.

Fig.3.